# EUROPÄISCHE PATENTSCHRIFT

(11) **EP 4 191 053 B1**
(45) Veröffentlichungstag und Bekanntmachung des Hinweises auf die Patenterteilung: **26.02.2025**
(21) Anmeldenummer: 21212511.6
(22) Anmeldetag: 06.12.2021
(51) Int. Cl.: F03D 80/40, F03D 1/06

(54) **WINDENERGIEANLAGEN-ROTORBLATT**
WIND TURBINE ROTOR BLADE
PALE DE ROTOR POUR ÉOLIENNES

(43) Veröffentlichungstag der Anmeldung: 07.06.2023
(73) Patentinhaber: Wobben Properties GmbH, 26607 Aurich (DE)
(72) Erfinder: Mahmoud, Muhanad, 26605 Aurich (DE); Godenau, Diethelm, 39279 Rosian (DE); Krebs, Sven, 26789 Leer (DE)
(74) Vertreter: Eisenführ Speiser

(56) Entgegenhaltungen:
- EP-A1- 4 180 654
- WO-A1-2017/021350
- CN-A- 103 511 196

## Beschreibung

Die vorliegende Erfindung betrifft ein Windenergieanlagen-Rotorblatt.

Da die Rotorblätter einer Windenergieanlage ungeschützt allen Witterungsbedingungen ausgesetzt sind, kann es bei bestimmten Temperaturen zu einer Vereisung der Rotorblätter kommen. Um dies zu verhindern, kann eine Rotorblattheizung verwendet werden. Hierbei kann entweder eine Heizung außen am Rotorblatt vorgesehen werden oder erwärmte Luft kann innerhalb des Rotorblattes vorgesehen sein.

Zur Vermeidung der Vereisung der Rotorblätter wird oftmals eine Rotorblattheizung verwendet. Hierbei wird typischerweise erwärmte Luft im Bereich der Rotorblattwurzel in das Innere des Rotorblattes eingeleitet. Die erwärmte Luft erwärmt wiederum die Rotorblattschale, beispielsweise im Bereich der Rotorblattnase, so dass eine Enteisung des Rotorblattes erreicht werden kann.

WO 2017/021350 A1 zeigt ein Windenergieanlagen-Rotorblatt mit einem Rotorblattwurzelbereich und einem Rotorblattspitzenbereich. Ferner ist mindestens ein Steg entlang einer Längsrichtung des Rotorblattes vorgesehen. An dem Steg kann eine Umlenkeinheit zum beim Umlenken der Luft vorgesehen.

WO 2018/211055 zeigt ein Rotorblatt einer Windenergieanlage mit einem Rotorblatt, welches einen Steg und eine Umlenkeinheit an der Rotorblattspitze zum Umlenken von erwärmter Luft aufweist. US 2017254316 zeigt ein Rotorblatt einer Windenergieanlage mit einer Rotorblattheizung.

Daher ist eine Aufgabe der vorliegenden Erfindung, ein Windenergieanlagen-Rotorblatt mit einer verbesserten Rotorblattheizung vorzusehen.

Diese Aufgabe wird durch ein Windenergieanlagen-Rotorblatt nach Anspruch 1 gelöst.

Somit wird ein Windenergieanlagen-Rotorblatt mit einer Rotorblattschale, welche ein Innenvolumen umgibt, und mindestens einer Querschnittsverengung zur Verengung des freien Querschnitts des Innenvolumens vorgesehen. Durch die Verengung kann die Strömungsgeschwindigkeit erhöht werden, was zu einer verbesserten Wärmeübertragung und damit einer besseren Erwärmung der Rotorblätter führt.

Erfindungsgemäß weist das Rotorblatt mindestens einen ersten und zweiten Steg entlang einer Längsrichtung des Rotorblattes auf. Ferner ist ein erster Luftkanal zwischen einer Vorderkante des Rotorblattes und einem ersten Steg vorgesehen, wobei mindestens eine erste Querschnittsverengung in dem ersten Luftkanal vorgesehen ist.

Gemäß einem weiteren Aspekt der vorliegenden Erfindung weist das Rotorblatt einen zweiten Luftkanal zwischen einem Steg und einer Rotorblatthinterkante auf. Eine zweite Querschnittsverengung ist zumindest teilweise in dem zweiten Luftkanal entlang der Längsrichtung des Rotorblattes vorgesehen.

Gemäß einem weiteren Aspekt der vorliegenden Erfindung weist das Rotorblatt mindestens eine dritte Querschnittsverengung in einem dritten Luftkanal zwischen dem ersten und zweiten Steg auf.

Erfindungsgemäß weist das Rotorblatt ein Rotorblattheizsystem in oder an der Wurzel des Rotorblattes auf. Das Rotorblattheizsystem erzeugt warme Luft, welche in das Innenvolumen des Rotorblattes befördert wird.

Die Erfindung betrifft ebenfalls eine Windenergieanlage mit mindestens einem oben beschrieben Windenergieanlagen-Rotorblatt.

Somit wird ein Windenergieanlagen-Rotorblatt mit einer (zweiteiligen) Blattschale vorgesehen, welche ein Innenvolumen umgibt. Das Rotorblatt weist ferner eine Rotorblattwurzel und eine Rotorblattspitze auf. Zwischen den beiden Blattschalen ist entlang einer Längsrichtung des Rotorblattes ein erster und zweiter Steg vorgesehen.

Das Rotorblatt weist ferner eine Rotorblattheizung auf, welche im Bereich der Rotorblattwurzel vorgesehen ist und erwärmte Luft in das Innenvolumen des Rotorblattes befördert. Zur Verbesserung der Effektivität der Blattheizung ist im Innenvolumen mindestens eine Querschnittsverengung vorgesehen, so dass das freibleibende Luftvolumen im Innenvolumen reduziert wird. Ferner wird damit auch der für die Luftströmung freie Querschnitt reduziert. Die Reduzierung des freien Querschnitts bewirkt eine Erhöhung der Strömungsgeschwindigkeit, da die Rotorblattheizung einen im Wesentlichen konstanten Luftvolumenstrom bereitstellt. Mit der erhöhten Strömungsgeschwindigkeit kommt es zu einer verbesserten Wärmeübertragung auf die Rotorblattschalen, so dass eine verbesserte Rotorblattheizung durch Vorsehen der Querschnittsverengungen erreicht werden kann.

Gemäß der Erfindung kommt es somit zu einer Reduzierung der freien Querschnittsfläche, durch welche die erwärmte Luft befördert werden kann.

Erfindungsgemäß ist ein Steg zwischen den zwei Blattschalen (Druckseite, Saugseite) vorgesehen, so dass im Bereich der Rotorblattvorderkante ein Luftkanal entsteht, durch welchen die von der Rotorblattheizung erwärmte Luft entlangströmen kann. Mindestens eine erste Querschnittsverengung wird im Bereich des ersten Kanals zumindest teilweise entlang einer Längsachse des Rotorblattes vorgesehen.

Erfindungsgemäß ist ein zweiter Steg zwischen den beiden Rotorblattschalen vorgesehen, so dass ein zweiter Kanal im Bereich der Rotorblatthinterkante entsteht. Eine optionale zweite Querschnittsverengung kann in diesem zweiten Kanal vorgesehen sein, so dass der für die Luftströmung freie Querschnitt des zweiten Kanals reduziert wird.

Gemäß einem Aspekt der vorliegenden Erfindung kann ein dritter Kanal zumindest teilweise zwischen dem ersten und zweiten Steg vorgesehen sein. Optional können in dem dritten Kanal dritte Querschnittsverengungen vorgesehen sein, um die freie Querschnittsfläche zu reduzieren.

Erfindungsgemäß sind im ersten Kanal entlang einer Längsachse des Rotorblattes drei erste Querschnittsverengungen vorgesehen, wobei eine erste Querschnittsverengung bei einer Rotorblattlänge zwischen 10 und 15 m, eine zweite Querschnittsverengung im Bereich einer Rotorblattlänge von 20 bis 25m und/oder eine dritte Querschnittsverengung im Bereich einer Rotorblattlänge von 30 bis 35 m vorgesehen ist.

Gemäß der Erfindung wird durch Reduzierung der freien Querschnittsfläche in einem Lüftungskanal die Strömungsgeschwindigkeit (die sich aus dem Volumenstrom und dem Querschnitt ergibt) erhöht. Mit der Erhöhung der Strömungsgeschwindigkeit steigt auch der Wärmeübergangskoeffizient α.

Gemäß der Erfindung erfolgt eine Änderung der Blattinnenströmung zur Verbesserung einer Wärmeübertragung der erhitzten Luft von der Blattheizung an die Rotorblattschale.

Die Querschnittsverengungen stellen passive Möglichkeiten der Erhöhung der Strömungsgeschwindigkeit dar.

Gemäß einem Aspekt der Erfindung können die Querschnittsverengungen nachträglich eingebaut werden.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2A und 2B: zeigen einen schematischen Querschnitt und einen schematischen Längsschnitt eines Rotorblattes gemäß dem Stand der Technik,
- Fig. 3A: zeigt einen schematischen Querschnitt eines Rotorblattes,
- Fig. 3B: zeigt einen schematischen Längsschnitt eines Rotorblattes gemäß Fig. 3A,
- Fig. 4A: zeigt einen schematischen Querschnitt eines ersten Abschnitts eines Rotorblattes,
- Fig. 4B: zeigt einen schematischen Querschnitt eines Abschnitts des Rotorblattes sowie einen schematischen Längsschnitt eines Rotorblattes,
- Fig. 4C: zeigt einen schematischen Querschnitt eines Abschnitts eines Rotorblattes und einen Längsschnitt eines Rotorblattes gemäß einem Aspekt der vorliegenden Erfindung,
- Fig. 5A: zeigt einen Graphen zur Veranschaulichung einer Oberflächentemperatur eines Rotorblattes für die in den Fig. 4A, 4B und 4C gezeigten Ausführungsbeispiele,
- Fig. 5B: zeigt einen Graphen zur Veranschaulichung eines Wärmeübergangskoeffizienten α als Funktion für die drei Ausführungsbeispiele von Fig. 4A, 4B und 4C,
- Fig. 5C: zeigt einen Graphen zur Veranschaulichung einer Heizleistung L für die Ausführungsbeispiele von Fig. 4A, 4B und 4C, und
- Fig. 6: zeigt einen Graphen zur Veranschaulichung einer Fluidtemperatur für die Ausführungsbeispiele von Fig. 4A, 4B und 4C.

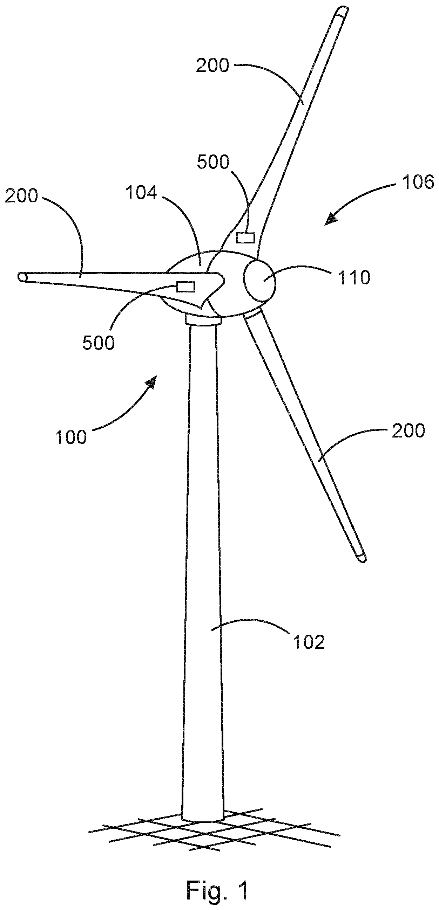

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

Zur Rotorblattenteisung kann eine Rotorblattheizung 500 im Bereich einer Rotorblattwurzel vorgesehen sein. Alternativ dazu kann die Rotorblattheizung 500 im Bereich einer Rotornabe oder an einem Rotorblattanschluss vorgesehen sein. Die Rotorblattheizung 500 erzeugt warme Luft und leitet sie dann in das Innere des Rotorblattes zur Enteisung des Rotorblattes oder zur Vorbeugung einer Vereisung.

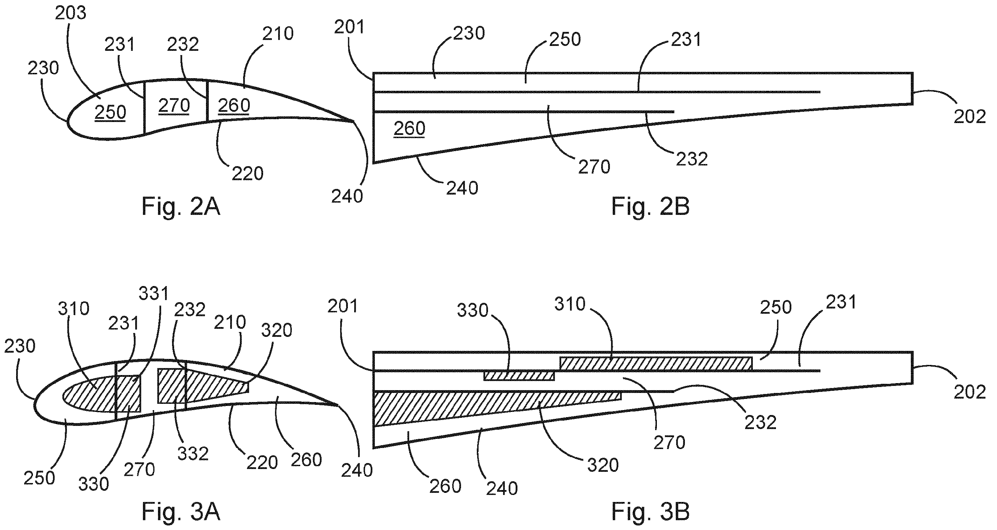

Fig. 2A zeigt einen Querschnitt eines Rotorblattes und Fig. 2B zeigt einen Längsschnitt eines Rotorblattes. Das Rotorblatt 200 weist zwei Blattschalen 210, 220 auf, welche ein Innenvolumen 203 umgeben. Das Rotorblatt 200 weist ferner eine Rotorblattvorderkante 230 und eine Rotorblatthinterkante 240 auf. Zwischen den Blattschalen 210, 220 können Stege 231, 232 vorgesehen sein, so dass das Innenvolumen 203 in verschiedene Abschnitte oder Kanäle 250, 260 und 270 (erster Kanal 250 zwischen Vorderkante 230 und erstem Steg 231, zweiter Kanal 260 zwischen Hinterkante 240 und zweitem Steg 232 und dritter Kanal 270 zwischen erstem und zweitem Steg 231, 232) aufgeteilt werden kann. Der Steg 231 kann beispielsweise länger sein als der Steg 232.

Fig. 3A und 3B zeigen einen entsprechenden Querschnitt eines Rotorblattes sowie einen Längsschnitt des Rotorblattes.

Während in dem Rotorblatt gemäß Fig. 2A und 2B die Kanäle 250, 260 und 270 unverändert dargestellt sind, sind in den Kanälen gemäß Fig. 3A und 3B zumindest abschnittsweise Querschnittsverengungen 310 im ersten Kanal 250, zweite Querschnittsverengungen 320 im zweiten Kanal 260 und/oder optional dritte Querschnittsverengungen 330 im dritten Kanal 270 vorgesehen. In Fig. 3B ist die Verteilung der Querschnittsverengungen 310, 320, 330 entlang einer Längsachse des Rotorblattes dargestellt.

Sowohl die Querschnitte der Querschnittsverengungen als auch ihre Verteilung entlang der Längsachse des Rotorblattes können von den in Fig. 3A und 3B dargestellten Querschnitten und Längsverteilungen abweichen.

Durch die Querschnittsverengungen kommt es zu einer höheren Strömungsgeschwindigkeit der durch die Rotorblattheizung 500 in das Innere (in die Kanäle 250, 260, 270) des Rotorblattes strömenden Luft.

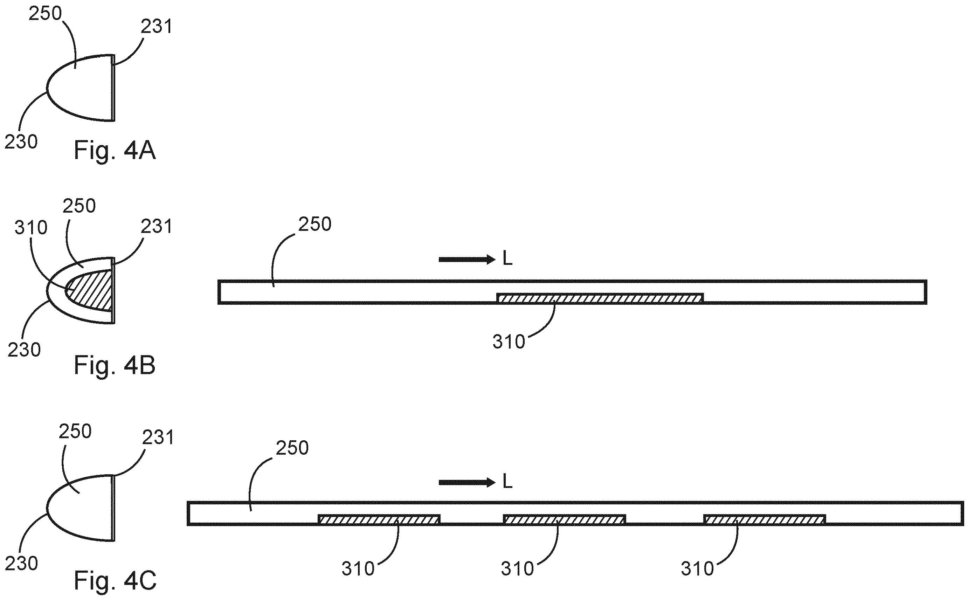

Fig. 4A zeigt einen schematischen Querschnitt eines ersten Kanals von Fig. 3A. In dem ersten Kanal 250 sind keine Querschnittsverengungen vorgesehen.

In Fig. 4B sind Querschnittsverengungen in dem ersten Kanal 250 vorgesehen. Die Verteilung der Querschnittsverengungen ist ebenfalls in Fig. 4B in einem schematischen Längsschnitt dargestellt. Hierbei können die Querschnittsverengungen 310 beispielsweise zwischen einer Rotorblattlänge oder einem Radius von 20 bis 30 m vorgesehen sein.

In Fig. 4C ist ein schematischer Querschnitt eines ersten Kanals sowie ein schematischer Längsschnitt des ersten Kanals dargestellt. Die Querschnittsverengungen 310 sind gemäß Fig. 4C an drei Stellen entlang der Rotorblattlängsachse, nämlich bei einem Rotorblattradius von 10 bis 15 m, 20 bis 25 m und 30 bis 35 m vorgesehen.

In Fig. 4A ist somit der Fall ohne Querschnittsverengungen dargestellt, in Fig. 4B ist der Fall mit einer Querschnittsverengung und in Fig. 4C ist ein Ausführungsbeispiel mit drei Querschnittsverengungen dargestellt.

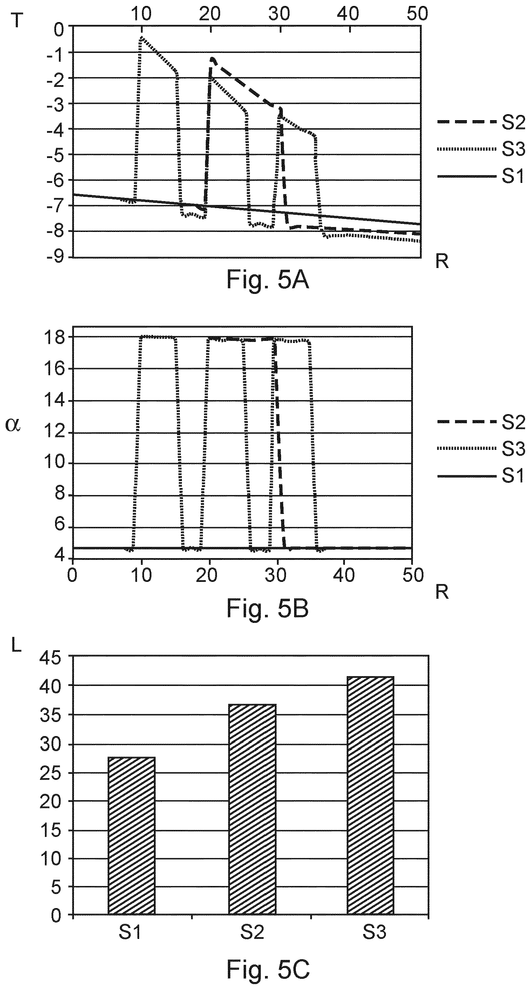

In Fig. 5A ist ein Graph dargestellt, welcher eine Abhängigkeit der Oberflächentemperatur vom Radius R des Rotorblattes für die Ausführungsbeispiele von Fig. 4A (S1), Fig. 4B (S2) und Fig. 4C (S3) darstellt. Bei dem Ausführungsbeispiel von Fig. 4A lässt sich eine lineare Abnahme der Oberflächentemperatur entlang des Radius R des Rotorblattes feststellen. Bei dem zweiten und dritten Ausführungsbeispiel von Fig. 4B und Fig. 4C sind Erhöhungen der Temperatur im Bereich der Querschnittsverengungen vorhanden.

In Fig. 5B ist eine Abhängigkeit des Wärmeübergangskoeffizienten α zum Radius R dargestellt. Beim Ausführungsbeispiel S1 von Fig. 4A ist keine Änderung zu sehen. Bei dem Ausführungsbeispiel S2 von Fig. 4B und S3 von Fig. 4C ist jeweils eine Erhöhung des Wärmeübergangskoeffizienten α im Bereich der Querschnittsverengungen zu sehen.

In Fig. 5C ist eine Heizleistung L für die obigen drei Ausführungsbeispiele S1, S2 und S3 dargestellt. Aus der Fig. 4 ist zu sehen, dass die Heizleistung mit zunehmender Verwendung der Querschnittsverengungen ansteigt.

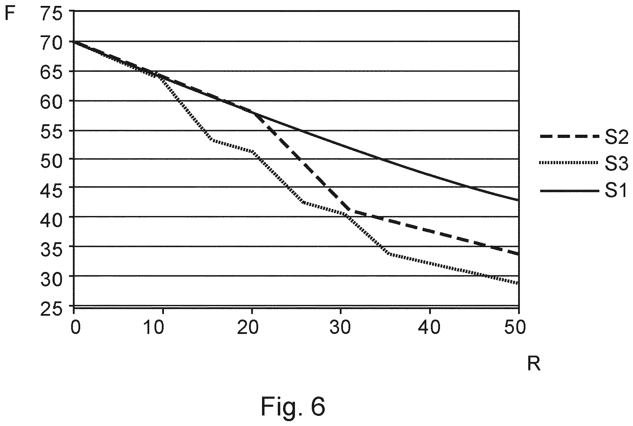

In Fig. 6 ist eine Abhängigkeit der Fluidtemperatur von dem Radius R dargestellt. Für das erste Ausführungsbeispiel S1 von Fig. 4A ist eine lineare Abnahme der Fluidtemperatur vorhanden. Bei den Ausführungsbeispielen S2 und S3 ist eine stärkere Abnahme der Fluidtemperatur dargestellt, wobei insbesondere im Bereich der Querschnittsverengungen eine stärkere Absenkung der Fluidtemperatur noch vorhanden ist.

Gemäß einem Aspekt der vorliegenden Erfindung können die Querschnittsverengungen z. B. bei Kanalquerschnitten mit einer Fläche von 30.000 mm² bis 100.000 mm² verwendet werden.

### Bezugszeichenliste

- 100: Windenergieanlage
- 102: Turm
- 104: Gondel
- 106: Rotor
- 110: Spinner
- 200: Rotorblätter
- 203: Innenvolumen
- 210: Blattschalen
- 220: Blattschalen
- 230: Rotorblattvorderkante
- 231: Stege
- 232: Stege
- 240: Rotorblatthinterkante
- 250: Kanäle
- 260: Kanäle
- 270: Kanäle
- 310: Querschnittsverengungen
- 320: Querschnittsverengungen
- 330: Querschnittsverengungen
- 500: Rotorblattheizung

## Patentansprüche

1. Windenergieanlagen-Rotorblatt (200), mit
einer Rotorblattschale (210, 220), welche ein Innenvolumen (203) umgibt,
einem Rotorblattheizsystem (500) in oder an einer Rotorblattwurzel (201) des Windenergieanlagen-Rotorblattes (200), wobei das Rotorblattheizsystem (500) erwärmte Luft erzeugt und in das Innenvolumen (203) des Rotorblattes (200) befördert,
einer passiven Strömungsgeschwindigkeits-Erhöhungseinheit in Form mindestens einer Querschnittsverengung (300, 310, 320, 330) zur Verengung eines freien Querschnitts des Innenvolumens (203), und
mindestens einem ersten und zweiten Steg (231, 232) entlang einer Längsachse (L) des Rotorblattes (200), und
einem ersten Luftkanal (250) zwischen einer Vorderkante (230) des Rotorblattes (200) und einem ersten Steg (231), wobei mindestens eine erste Querschnittsverengung (310) in dem ersten Luftkanal (250) vorgesehen ist,
**dadurch gekennzeichnet, dass** die erste Querschnittsverengung (310) dreiteilig ausgestaltet ist und bei einer Rotorblattlänge (L) von 10 m bis 15 m, 20 m bis 25 m und 30 m bis 35 m vorgesehen ist.

2. Windenergieanlagen-Rotorblatt (200) nach Anspruch 1, mit
einem zweiten Luftkanal (260) zwischen einem Steg (231, 232) und einer Rotorblatthinterkante (240), wobei mindestens eine zweite Querschnittsverengung (320) zumindest teilweise in dem zweiten Luftkanal (260) entlang der Längsrichtung (L) des Rotorblattes (200) vorgesehen ist.

3. Windenergieanlagen-Rotorblatt (200) nach Anspruch 2, mit
mindestens einer dritten Querschnittsverengung (330) in einem dritten Lüftungskanal (270) zwischen dem ersten und zweiten Steg (231, 232).

4. Windenergieanlage (100) mit mindestens einem Windenergieanlagen-Rotorblatt (200) nach einem der Ansprüche 1 bis 3.

## Claims

1. A wind turbine rotor blade (200), with
a rotor blade shell (210, 220), which envelops an internal volume (203),
a rotor blade heating system (500) in or on a rotor blade root (201) of the wind turbine rotor blade (200), wherein the rotor blade heating system (500) generates heated air, and conveys it into the internal volume (203) of the rotor blade (200),
a passive flow rate increasing unit in form of at least one cross sectional constriction (300, 310, 320, 330) for narrowing a free cross section of the internal volume (203), and
at least one first and second web (231, 232) along a longitudinal axis (L) of the rotor blade (200),
a first air channel (250) between a leading edge (230) of the rotor blade (200) and a first web (231), wherein at least one first cross sectional constriction (310) is provided in the first air channel (250),
**characterized in that** the first cross sectional constriction is in three parts and arranged at a rotor blade length (L) of between 10 m to 15 m, of at between 20 m to 25 m and of between 30 m to 35 m.

2. The wind turbine rotor blade (200) according to claim 1, with
a second air channel (260) between a web (231, 232) and a rotor blade trialing edge (240), wherein at least one second cross sectional constriction (320) is provided at least partially in the second air channel (260) along the longitudinal direction (L) of the rotor blade (200).

3. The wind turbine rotor blade (200) according to claim 2, with
at least one third cross sectional constriction (330) in a third ventilation channel (270) between the first and second webs (231, 232).

4. A wind turbine (100) with at least one wind turbine rotor blade (200) according to one of claims 1 to 3.

## Revendications

1. Pale de rotor d'éolienne (200), avec
une coque de pale de rotor (210, 220), laquelle entoure un volume intérieur (203),
un système de chauffage de pale de rotor (500) dans ou sur une racine de pale de rotor (201) de la pale de rotor d'éolienne (200), dans laquelle le système de chauffage de pale de rotor (500) génère de l'air réchauffé et le transporte dans le volume intérieur (203) de la pale de rotor (200),
une unité d'augmentation de la vitesse d'écoulement passive sous la forme au moins d'un rétrécissement de section transversale (300, 310, 320, 330) destiné à rétrécir une section transversale libre du volume intérieur (203), et
au moins une première et une deuxième entretoise (231, 232) le long d'un axe longitudinal (L) de la pale de rotor (200), et
un premier canal d'air (250) entre un bord d'attaque (230) de la pale de rotor (200) et une première entretoise (231), dans laquelle au moins un premier rétrécissement de section transversale (310) est prévu dans le premier canal d'air (250),
**caractérisée en ce que** le premier rétrécissement de section transversale (310) est configuré en trois parties et est prévu pour une longueur de pale de rotor (L) de 10 m à 15 m, de 20 m à 25 m, et de 30 m à 35 m.

2. Pale de rotor d'éolienne (200) selon la revendication 1, avec
un deuxième canal d'air (260) entre une entretoise (231, 232) et un bord de fuite de pale de rotor (240), dans laquelle au moins un deuxième rétrécissement de section transversale (320) est prévu au moins en partie dans le deuxième canal d'air (260) le long de la direction longitudinale (L) de la pale de rotor (200).

3. Pale de rotor d'éolienne (200) selon la revendication 2, avec
au moins un troisième rétrécissement de section transversale (330) dans un troisième canal d'air (270) entre la première et la deuxième entretoise (231, 232).

4. Éolienne (100) avec au moins une pale de rotor d'éolienne (200) selon l'une quelconque des revendications 1 à 3.
